# EUROPEAN PATENT APPLICATION

(11) **EP 1 732 326 A1**
(43) Date of publication of application: **13.12.2006**
(21) Application number: 06011732.2
(22) Date of filing: 07.06.2006
(51) Int. Cl.: H04N 7/173, H04N 5/445, H04H 9/00

(54) **Method for providing interactive digital broadcasting service in mobile communication terminal**

(30) Priority: 07.06.2005 KR 20050048283; 13.08.2005 KR 20050074589
(71) Applicant: Samsung Electronics Co., Ltd., Suwon-si, Gyeonggi-Do (KR)
(72) Inventor: Yoon, Jun, Yeongtong-gu, Suwon-si, Gyeonggi-do (KR); Kim, Hark-Sang, Yeongtong-gu, Suwon-si, Gyeonggi-do (KR); Park, Seok-Hyo, Yeongtong-gu, Suwon-si, Gyeonggi-do (KR); Park, Young-Sik, Yeongtong-gu, Suwon-si, Gyeonggi-do (KR); Lim, Dong-Soo, Yeongtong-gu, Suwon-si, Gyeonggi-do (KR); Park, Jung-Hoon, Suwon-si, Gyeonggi-do (KR); Choi, Seung-Chul, Yeongtong-gu, Suwon-si, Gyeonggi-do (KR)
(74) Representative: Lang, Johannes

(57) **Abstract**

Disclosed is a method for providing an interactive digital broadcasting service in a mobile communication terminal for receiving digital broadcasting. Digital broadcasting signals including URL information of the digital broadcasting are received and outputted, the URL information from the received digital broadcasting signals is detected, a website of the digital broadcasting is accessed using the detected URL information when a broadcast information request for the digital broadcasting is received from a user, and broadcasting information provided from the website is displayed in a portion of a digital broadcasting output screen. Thus, while watching the digital broadcasting, users can access the Internet, retrieve information relating to broadcasting contents and state their opinion about broadcast programs.

## Description

### BACKGROUND OF THE INVENTION

### 1. Field of the Invention

The present invention relates to a method for providing a digital broadcasting service in a mobile communication terminal, and more particularly to a method for providing an interactive digital broadcasting service in a mobile communication terminal.

### 2. Description of the Related Art

Digital broadcasting provides users with services featuring high picture quality, high speech quality and high Quality of Service (QoS), in contrast with conventional analog broadcasting. Digital broadcasting may be classified into satellite digital broadcasting and terrestrial digital broadcasting.

Satellite digital broadcasting provides a mobile service that enables uses to watch multi-channel multimedia broadcasting through a portable receiver (cell phone, personal digital assistant, etc.) or a vehicle receiver regardless of time and place.

Terrestrial digital broadcasting, which began as Digital Audio Broadcasting (DAB digitization of radio) provides mobile multimedia broadcasting through a 12^{th} channel of a Very High Frequency (VHF) band that is currently empty. Terrestrial digital broadcasting is for synthetically transmitting television broadcasting, radio broadcasting and data broadcasting through multi-channels.

With the recent increase in broadcast programs in which viewers can directly participate, a user has frequently participated in a corresponding program while watching digital broadcasting (e.g. amusement, discussion, relief donation collection, ARS program, etc.). For example, when a user wants to inquire about corresponding goods while watching a home shopping program, the user calls a telephone number displayed on a caption and communicates with a service representative.

Further, since there are various digital broadcast programs being provided in which a user can participate, users may frequently have desire to more actively participate in broadcasting.

However, at the present time, a method in which a user can participate in broadcast programs is restricted.

For example, in the case of relief donation collection broadcasting, when a user wants to make a donation while watching the relief donation collection broadcasting through a conventional TV, the user can call an ARS telephone number displayed in a caption on the screen to donate money. Further, even when the user wants to donate money while watching the relief donation collection broadcasting by using a mobile communication terminal capable of receiving digital broadcasting, the user can donate the money by pausing viewing of the broadcast, calling an ARS telephone number, contributing the money, and then resuming viewing of the digital broadcast.

However, the user must directly input the telephone number displayed on the screen. If the user watches a conventional TV, the user may also input the telephone number while watching the TV screen because the user utilizes a separate phone. However, when the user utilizes a terminal having a phone function and a digital broadcasting output function, a digital broadcast-watching mode must be switched to a communication mode in order to call the telephone number. A similar process is required when creating and transmitting a text message.

Further, even when a user wants to obtain broadcasting information on a specific program while watching digital broadcasting through a terminal, the user must search for a corresponding Internet website through a separate apparatus such as a computer, and then obtain the broadcasting information. Otherwise, the user must inconveniently end a broadcast-watching mode, access the Internet, and obtain the desired information.

### SUMMARY OF THE INVENTION

Accordingly, the present invention has been made to solve the above-mentioned problems occurring in the prior art, and it is an object of the present invention to provide a method for providing an interactive digital broadcasting service, in which a user can efficiently participate in a digital broadcast program when the user watches the corresponding program allowing the participation of a viewer through a mobile communication terminal.

It is another object of the present invention to provide a method for enabling easy acquisition of information when a user wants to obtain the information while watching digital broadcasting through a mobile communication terminal.

According to the present, there is provided a method for providing an interactive digital broadcasting service in a mobile communication terminal capable of receiving digital broadcasting, the method including receiving and outputting digital broadcasting signals including uniform resource locator (URL) information of the digital broadcasting, detecting the URL information from the received digital broadcasting signals, accessing a website of the digital broadcasting with the detected URL information when a broadcast information request for the digital broadcasting is received from a user, and displaying broadcasting information provided from the website in a portion of a digital broadcasting output screen.

In order to accomplish the aforementioned object, according to the present invention, there is provided a method for providing an interactive digital broadcasting service in a mobile communication terminal capable of receiving digital broadcasting, including receiving and outputting digital broadcasting signals including URL information of the digital broadcasting, detecting the URL information from the received digital broadcasting signals, accessing a website of the digital broadcasting through the detected URL information when a broadcast information request for the digital broadcasting is received from a user, displaying a viewer participation screen provided from the website in a portion of a digital broadcasting output screen, and transmitting data input by the user through the displayed viewer participation screen to the website.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram schematically illustrating a digital broadcasting system according to the present invention;
FIG. 2 is a block diagram illustrating the construction of a mobile communication terminal according to the present invention;
FIG. 3 is a flow diagram illustrating a process for providing an interactive digital broadcasting service in a mobile communication terminal according to a first embodiment of the present invention;
FIGs. 4A to 4G illustrate a process for providing an interactive digital broadcasting service in a mobile communication terminal according to a first embodiment of the present invention;
FIG. 5 is a flow diagram illustrating a process for providing an interactive digital broadcasting service in a mobile communication terminal according to a second embodiment of the present invention;
FIG. 6 is a flow diagram illustrating a process for providing an interactive digital broadcasting service in a mobile communication terminal according to a third embodiment of the present invention; and
FIGs. 7A to 7H illustrate a process for providing an interactive digital broadcasting service in a mobile communication terminal according to a third embodiment of the present invention

### DETAILED DESCRIPTION OF THE PREFERRED EMBODIMENT

Hereinafter, preferred embodiments according to the present invention will be described with reference to the accompanying drawings. It should be noted that the similar components are designated by similar reference numerals although they are illustrated in different drawings. Also, in the following description, a detailed description of known functions and configurations incorporated herein will be omitted for the sake of clarity and conciseness.

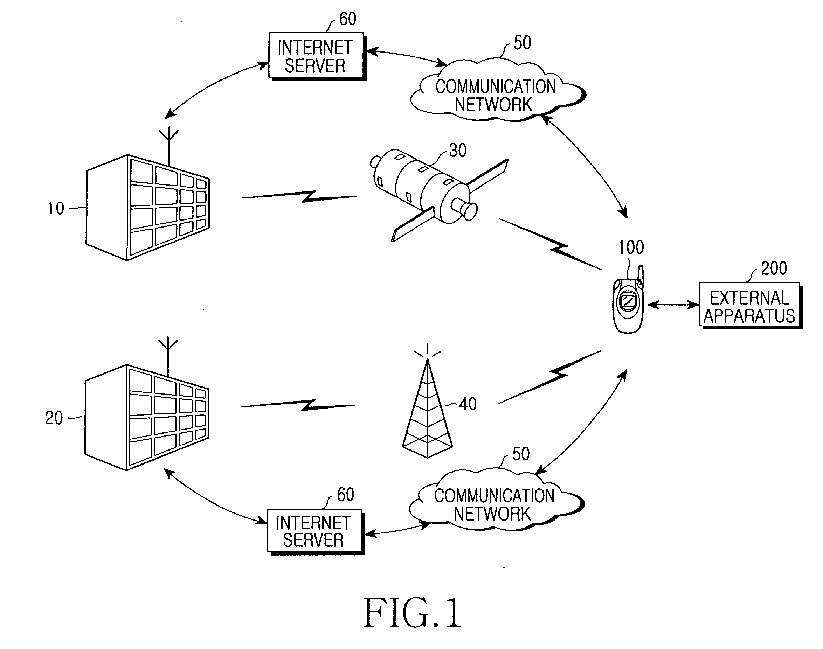

FIG. 1 is a block diagram illustrating a digital broadcasting system according to the present invention.

Referring to FIG. 1, the digital broadcasting system includes broadcasting stations 10 and 20 for converting multimedia data into digital broadcasting data and broadcasting the digital broadcasting data, and a mobile communication terminal 100 for receiving the digital broadcasting data and outputting multimedia data. The digital broadcasting data output from the satellite broadcasting station 10 is transferred to the mobile communication terminal 100 through a satellite 30, and the digital broadcasting data output from the terrestrial broadcasting station 20 is transferred to the mobile communication terminal 100 through a gap filler 40. The mobile communication terminal 100 includes both a vehicle terminal for receiving digital broadcasting and a portable terminal for receiving digital broadcasting.

A mobile communication network 50 includes a plurality of exchanges (not shown) for switching a speech path, a plurality of Base Station Controllers (BSCs) connected to each exchange and a plurality of Base Stations (BSs) connected to each BSC.

Each BS is connected to a plurality of Mobile Stations (MSs) through a public transport network. Herein, the BS and the MS are connected in a time division multiple access (TDMA) or code division multiple access (CDMA) manner, so that it is possible to transmit packet data such as short message service (SMS) messages. Further, each exchange is connected to a Public Switched Telephone Network (PSTN), an Integrated Services Digital Network (ISDN), or another mobile communication network through a gateway, and may also be connected to the Internet through an Inter-Working Function (IWF) and a wireless application protocol (WAP) gateway. In the following description, since the functions of the elements and the correlation of operations among the elements in the mobile communication network 50 are well known to those skilled in the art, details will be omitted. An Internet server 60 includes websites (e.g. homepages) with URL addresses, is connected to the broadcasting stations 10 and 20 to store and manage information, etc., relating to digital broadcast programs, and to transmit various Internet data (e.g. information relating to digital broadcast programs) to the mobile communication terminal 100 through the mobile communication network 50.

The digital broadcasting system may further include a message server (not shown) in order to provide a message transmission service.

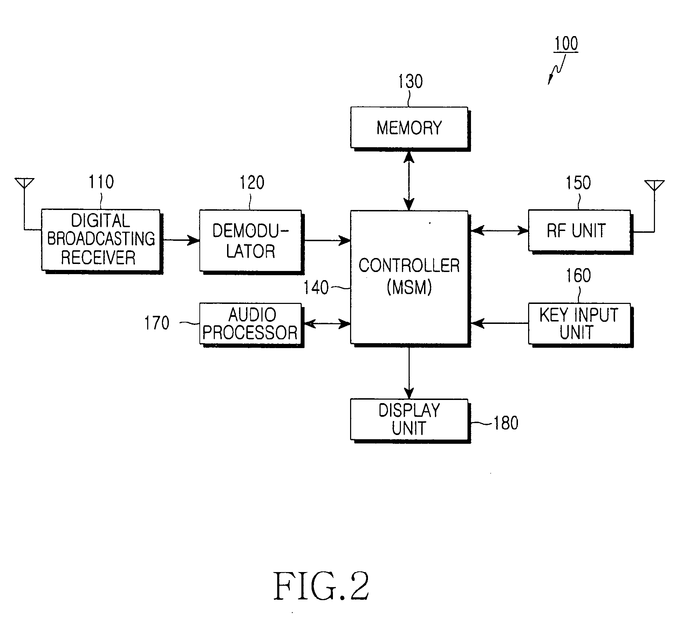

FIG. 2 is a block diagram illustrating the construction of the mobile communication terminal according to the present invention.

The mobile communication terminal 100 includes a digital broadcasting receiver 110, a demodulator 120, a memory 130, a controller 140, a Radio Frequency (RF) unit 150, a key input unit 160, an audio processor 170 and a display unit 180. The following description will be given on an assumption that the mobile communication terminal 100 performs a digital broadcasting function and a mobile communication function through one module. However, it should be noted that the present invention can be applied even when the mobile communication terminal 100 is divided into a module for performing the digital broadcasting function and a module for performing the mobile communication function.

The digital broadcasting receiver 110 receives digital broadcasting signals and outputs the received digital broadcasting signals to the demodulator 120. Herein, it is assumed that the digital broadcasting signals include at least one URL information.

The URL information represents the address of an Internet website, and corresponds to at least one of the URL information of the main website of digital broadcasting and the URL information of the specific program of the digital broadcasting. The main website represents the website of a broadcasting station having transmitted digital broadcasting signals.

Hereinafter, a method for inserting URL information into digital broadcasting signals will be described.

A terrestrial digital broadcasting transmission frame includes a Main Service Channel (MSC) having broadcasting data and a Fast Information Channel (FIC) representing information of the MSC. Herein, it is possible to insert URL information of digital broadcasting into the type 0/extension field of a fast information group of the FIC. Since the URL information is text information, its size is not large. Since the terrestrial digital broadcasting transmission frame has a conventional structure known in the art, details will be omitted.

In addition to the method as described above, it is also possible to insert the URL information into a channel, e.g. Electronic Program Guide (EPG) channel, which is commonly used at a period of a digital broadcasting channel.

A broadcaster periodically transmits EPG information. Herein, the broadcaster updates the content and structure of the EPG information at regular intervals and transmits the updated EPG information. Briefly, the EPG includes a Broadcaster Information Table (BIT), a Service Description Table (SDT), an Event Information Table (EIT) and a Time Offset Table (TOT). The BIT is used for transmitting broadcasting station information, announcements, broadcasting station names and current channel lists. The SDT is used to transmit information of each channel. The information of the channel includes channel names and URL information on channels. The EIT represents genre information of each program. The genre information includes programs and program URL information. The TOT represents current time information.

Accordingly, the URL information is included in the EPG information and received together with the digital broadcasting signals.

The demodulator 120 removes a carrier from the digital broadcasting signals received in the digital broadcasting receiver 110, demodulates the digital broadcasting signals, from which the carrier has been removed, into a digital data stream, and outputs the digital data stream to the controller 140.

The memory 130 stores various information necessary for controlling the operation of the mobile communication terminal 100 according to the embodiment of the present invention. Further, the memory 130 stores the URL information included in the digital broadcasting signals under the control of the controller 140.

The controller 140 controls the general operation of the mobile communication terminal 100 according to the present invention. The controller 140 decodes the digital data stream output from the demodulator 120, and outputs the decoded digital data stream to the audio processor 170 and the display unit 180 through a video signal processor (not shown) and an audio signal processor (not shown).

If the digital broadcasting signals including the URL information of digital broadcasting are received in the digital broadcasting receiver 110, the controller 140 detects the URL information from the received digital broadcasting signals. Then, the controller 140 causes the detected URL information to be stored in the memory 130.

If a broadcast information request for the digital broadcasting, which is being output through the audio processor 170 and the display unit 180, is received from a user, the controller 140 accesses the website of the digital broadcasting by using the URL information. It is preferred that the controller 140 displays at least two sets of detected URL information so that the user can easily select a website for which broadcasting information is to be requested. This is because the detected URL information corresponds to at least one of the URL information of the main website of the digital broadcasting and the URL information of the specific program of the digital broadcasting. Further, when the broadcasting information is requested, the controller 140 may also detect the URL information.

The website may also be either the main website (i.e. the website of a broadcasting station having transmitted digital broadcasting signals) of the digital broadcasting or the website of the specific program of the digital broadcasting. Herein, if digital broadcasting being currently output corresponds to a news program of a particular broadcasting station, the mobile communication terminal 100 may access the website of the broadcasting station through the URL address, or may also directly access the website of the news program.

The controller 140 displays broadcasting information provided from the accessed website in a portion of the digital broadcasting output screen being output through the display unit 180.

Further, if a broadcast information request for digital broadcasting being currently output is received from a user, the controller 140 may transmit the detected URL information to a separate external apparatus 200 connected to the mobile communication terminal 100. In such a case, the mobile communication terminal 100 may access the website of the digital broadcasting through the external apparatus 200. Herein, the mobile communication terminal 100 may be connected to the external apparatus 200 in a wired or wireless manner.

In the meantime, if a broadcasting participation request for the digital broadcasting being currently output is received from a user, the controller 140 controls the RF unit 150 to access the website with the detected URL address.

Then, the controller 140 displays a viewer participation screen (e.g. a viewer quiz screen, a viewer report screen, a question inquiry screen, etc.) provided from the website in a portion of the digital broadcasting output screen of the display unit 180.

The controller 140 transmits data that is input by a user through the displayed viewer participation screen, to a corresponding website through the mobile communication network 50 and the Internet server 60. Further, the controller 140 may transmit the input data in the form of a text message. In such a case, it is preferred that the digital broadcasting system in FIG. 1 includes a message server (not shown).

The RF unit 150 takes charge of transmission/reception of voice data, text data, image data and control data under the control of the controller 140. For this, the RF unit 150 includes at least an RF transmitter (not shown) for up-converting and amplifying the frequency of transmitted signals and an RF receiver (not shown) for low noise-amplifying received signals and down-converting the frequency of the received signals. Further, the mobile communication terminal 100 may include at least a modem having a transmitter (not shown) for coding and modulating the transmitted signals and a receiver (not shown) for demodulating and decoding the received signals.

The key input unit 160 may include at least a character key, a number key and various function keys, and outputs key input signals corresponding to keys input by a user to the controller 140.

The audio processor 170 modulates electrical signals input from a microphone (not shown) before being converted to voice data, demodulates coded voice data input from the RF unit 150 into electrical signals, and outputs the electrical signals to a speaker (not shown). Further, it is preferred that the audio processor 170 includes a codec for converting digital audio signals received in the RF unit 150 into analog signals and reproducing the analog signals, or converting analog audio signals generated from the microphone into digital audio signals. The codec includes a data codec for processing packet data, and an audio codec for processing audio signals such as voice. The codec may also be included in the controller 140.

The display unit 180 may include a Liquid Crystal Display (LCD), and displays both various display data generated in the mobile communication terminal 100 and the digital broadcasting output screen decoded in the video processor (not shown). Herein, when the display unit 180 has a touch screen function, the display unit 180 may also operate as an input unit.

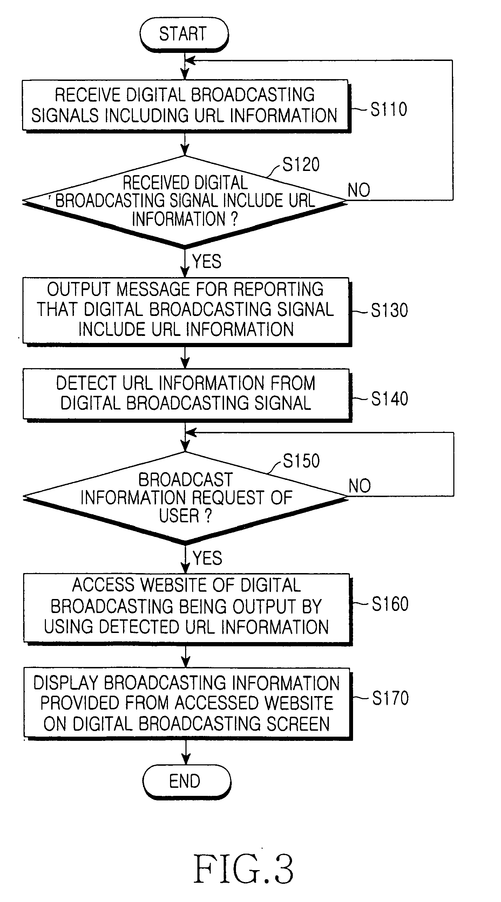

FIG. 3 is a flow diagram illustrating a process for providing an interactive digital broadcasting service in the mobile communication terminal according to a first embodiment of the present invention.

FIG. 3 will be described with reference to FIGs. 1 and 2.

The controller 140 receives digital broadcasting signals, which include URL information of digital broadcasting, through the digital broadcasting receiver 110, and outputs the digital broadcasting signals through an output unit (S 110). The URL information included in the digital broadcasting signals corresponds to at least one of the URL information of the main website of the digital broadcasting and the URL information of the specific program of the digital broadcasting. The output unit represents the audio processor 170 and the display unit 180, and the audio processor 170 includes a speaker.

The controller 140 determines whether the digital broadcasting signals received in the digital broadcasting receiver 110 include the URL information (S120). The URL information may also be included in the transmission frame of the digital broadcasting signals or the EPG information received together with the digital broadcasting signals as described in FIG. 2.

If the received digital broadcasting signals include the URL information, the controller 140 outputs a message for reporting this status to the display unit 180 (S 130). It is preferred that the controller 140 outputs the message together with the received digital broadcasting signals.

The controller 140 detects the URL information from the digital broadcasting signals (S 140). It is preferred that the controller 140 stores the detected URL information in the memory 130, and that the controller 140 displays (e.g. in a one-line sliding manner) the detected URL information in a portion of the digital broadcasting screen being output. This allows a user to easily select a website for which broadcasting information is to be requested.

The controller 140 determines whether a broadcast information request is received from the user (S 150). The user inputs a preset key or selects the displayed URL information by using a direction key in order to access the Internet, thereby requesting the broadcasting information. Herein, the user may request the broadcasting information through a menu. The preset key may correspond to one of the keys provided in the key input unit 160 or a separate key.

The broadcast information request represents a request for information relating to a digital broadcast program which the user is watching, but it may represent a request for other content information (e.g., information such as weather, traffic and stock) other than the digital broadcast program. In such a case, it is preferred that the user accesses the main website of a broadcasting station and receives corresponding content information, instead of a website with the URL information of a specific program.

In such a case, the controller 140 transmits content search information input by the user on the displayed website to the Internet server 60 through the RF unit 150. Then, the controller 140 receives content information provided from the Internet server 60 in response to the transmission of the content search information, and displays the received content information on the broadcasting output screen of the display unit 180.

Information relating to the digital broadcast program may include such information as the previous episode or the next episode of a drama, an introduction about the performers of a show program, a description of a movie studio, the rules of a sports game and details about participating athletes.

If the broadcast information request is received from the user, the controller 140 accesses the website of the digital broadcasting being currently output by using the detected URL information (S160). That is, the controller 140 controls the RF unit 150 to access the website of the Internet server 60 through the mobile communication network 50. For example, if digital broadcasting being currently output corresponds to a news program of a particular broadcasting station, the mobile communication terminal 100 accesses the website of the broadcasting station through the URL address, or accesses the website of the news program.

The controller 140 displays broadcasting information provided from the accessed website in a portion of the digital broadcasting output screen being output through the display unit 180 (S 170). Herein, it is preferred that the controller 140 displays the broadcasting information provided from the homepage on the digital broadcasting output screen through either an On-Screen-Display (OSD) or a Picture In Picture (PIP).

In the meantime, when the broadcast information request is received or a separate Internet access request is received during the output of the digital broadcasting, the controller 140 may generate a URL input window so that a user can directly input a URL address, and may also display the URL input window in a portion of the screen on the display unit 180, such as the lower end portion. In such a case, if URL information is input to the input window, the controller 140 controls access to a corresponding website by using the input URL information, and displays Internet data such as broadcasting information provided from the website in a portion of the digital broadcasting output screen.

When a message creation request is received from the user during the output of the digital broadcasting, the controller 140 generates a message creation window, and displays the message creation window in a portion of the screen on the display unit 180. If a message is input, the controller 140 may also cause the input message to be transmitted to a requested recipient.

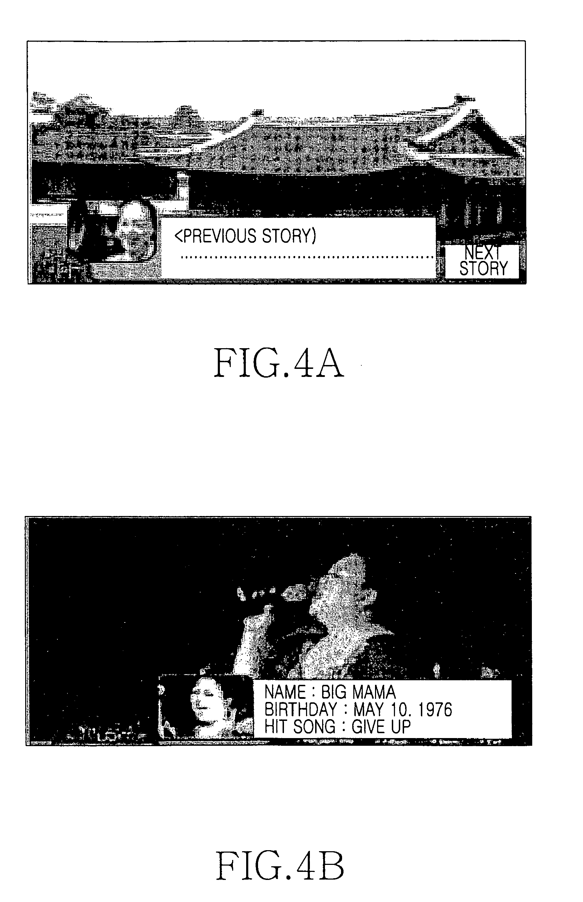

FIGs. 4A to 4G are views illustrating the process for providing the interactive digital broadcasting service in the mobile communication terminal according to the first embodiment of the present invention. More particularly, FIGs. 4A to 4G illustrate screens provided from the website of the digital broadcasting being currently output, that display information in portions of a digital broadcasting output screen after the mobile communication terminal accesses the website in response to the broadcast information request of a user while the digital broadcast program of a selected channel is output. The information provided from the website to the mobile communication terminal includes information directly searched for by the user.

FIG. 4A illustrates a screen on which the mobile communication terminal displays the previous episode of a selected drama provided from the website of the drama in response to the broadcast information request of the user during the output of the drama. Accordingly, when the user wants to know the episode of a corresponding drama while watching the drama, the user can easily view this information.

FIG. 4B illustrates a screen on which the mobile communication terminal displays the performers of a song program and their profiles provided from the website of the song program in response to the user request during the output of the song program.

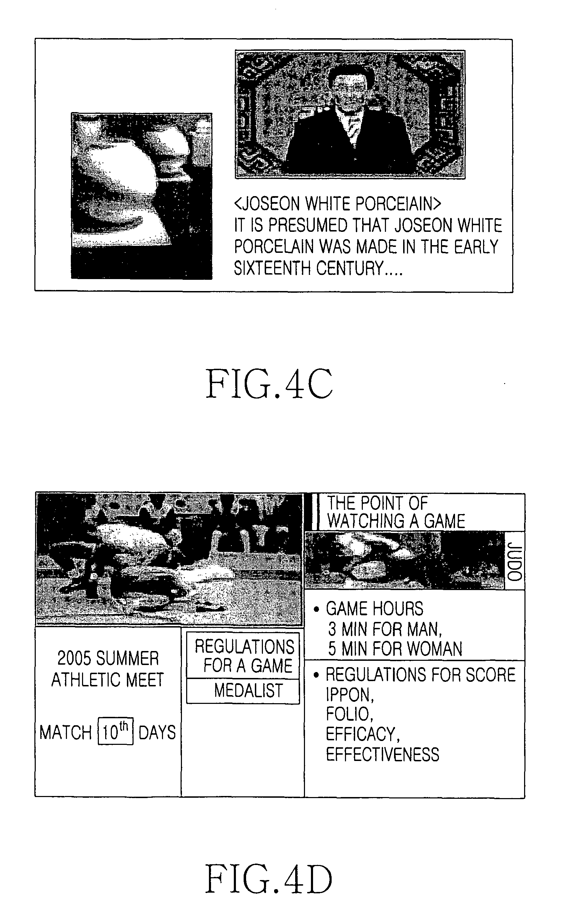

FIG. 4C illustrates a screen on which the mobile communication terminal displays information on goods provided from the homepage of a selected broadcast program in response to the information request of the user for the goods.

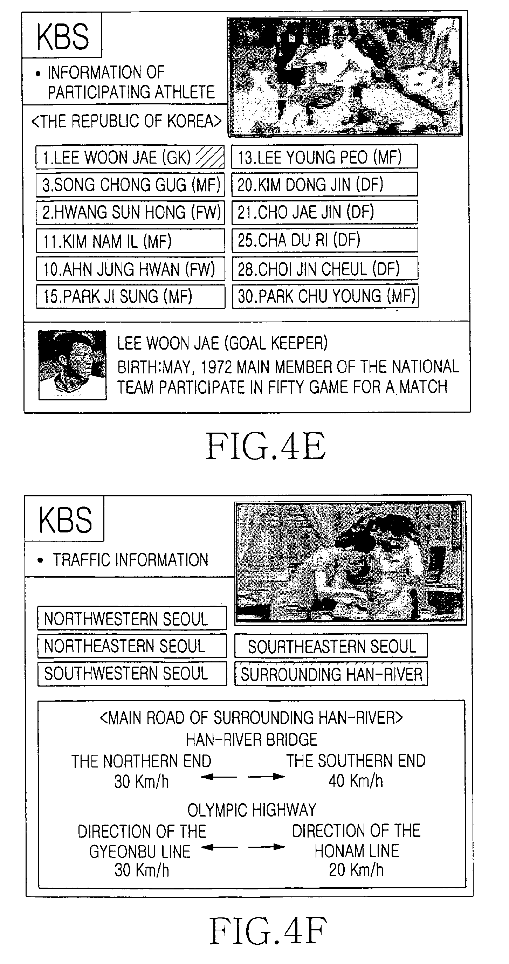

FIGs. 4D and 4E respectively illustrate screens on which the mobile communication terminal displays details about the participating athletes and the rules of corresponding sports provided from the website of a sporting event program in response to the information request of the user during the output of the sporting event program. Accordingly, the user can conveniently view the rules and athletes of the sport that the user is watching through the mobile communication terminal.

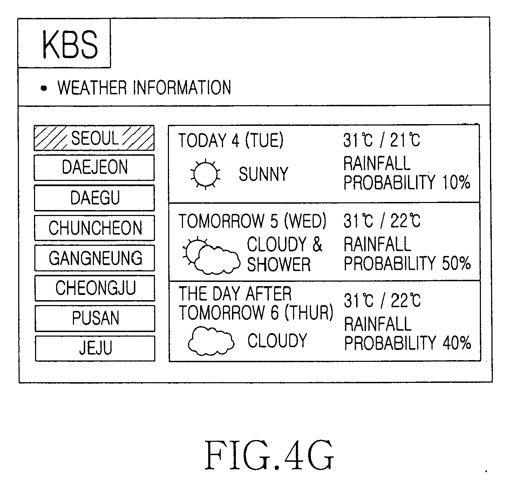

FIGs. 4F and 4G respectively illustrate screens on which the mobile communication terminal displays information on requested contents provided from the main website of a broadcasting station having transmitted appropriate digital broadcasting in response to the request of the user for the content information (e.g. information such as weather, traffic and stock) during the output of the digital broadcasting. Accordingly, the user can directly search for desired information through the main website of the digital broadcasting being currently output and view the searched information in real-time.

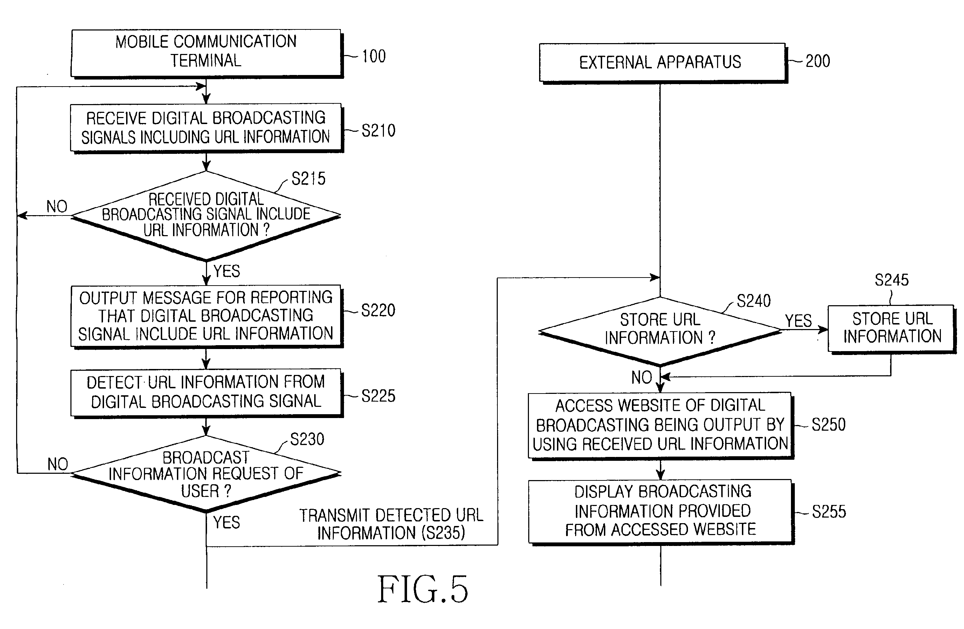

FIG. 5 is a flow diagram illustrating a process for providing an interactive digital broadcasting service in the mobile communication terminal according to a second embodiment of the present invention.

Hereinafter, FIG. 5 will be described with reference to FIGs. 1 and 2.

The controller 140 receives digital broadcasting signals, which have been transmitted from the broadcasting stations 10 and 20, through the digital broadcasting receiver 110, and outputs the digital broadcasting signals through an output unit (S210). The URL information included in the digital broadcasting signals corresponds to at least one of the URL information of the main website of the digital broadcasting and the URL information of the specific program of the digital broadcasting.

The controller 140 determines whether the digital broadcasting signals received in the digital broadcasting receiver 110 include the URL information (S215). The URL information may also be included in the transmission frame of the digital broadcasting signals or the EPG information received together with the digital broadcasting signals as described in FIG. 2.

If the received digital broadcasting signals include the URL information, the controller 140 outputs a message for reporting this status to the display unit 180 (S220). It is preferred that the controller 140 outputs the message together with the received digital broadcasting signals.

The controller 140 detects the URL information from the digital broadcasting signals (S225). It is preferred that the controller 140 stores the detected URL information in the memory 130. The controller 140 may also display the detected URL information in a portion of the digital broadcasting screen being output. Herein, the controller 140 may also display both the URL information of the main website of the digital broadcasting and the URL information of the specific program of the digital broadcasting at the same time. This is for allowing a user to easily select a website for which broadcasting information is to be requested.

The controller 140 determines whether a broadcast information request is received from the user (S230). The user inputs a preset key in order to access the Internet, thereby requesting the broadcasting information. Also, the user may request the broadcasting information by inputting a menu key. The preset key may correspond to one of the keys provided in the key input unit 160 or a separate key. Further, when the broadcasting information is requested, the controller 140 may generate an URL input window so that the user can directly input a URL address, and may also display the URL input window in the lower end portion of the screen on the display unit 180.

If the broadcast information request for the digital broadcasting being currently output is received from the user, the controller 140 transmits the detected URL information to the separate external apparatus 200 (e.g. a computer) connected to the mobile communication terminal 100 (S235). The mobile communication ter minal 100 may be connected to the computer 200 in a wired or wireless manner.

If URL information is transmitted from the mobile communication terminal 100, the computer 200 determines whether the URL information is to be stored (S240).

If a storage request for the URL information exists, the computer 200 stores the URL information in a separate storage area (S245).

The computer 200 accesses the website of the digital broadcasting, which the mobile communication terminal 100 is outputting, by using the received URL information (S250). That is, the computer 200 accesses the Internet server 60 through the mobile communication network 50 or a separate wired local area network (LAN).

The computer 200 displays information provided from the accessed website on a screen thereof (S255).

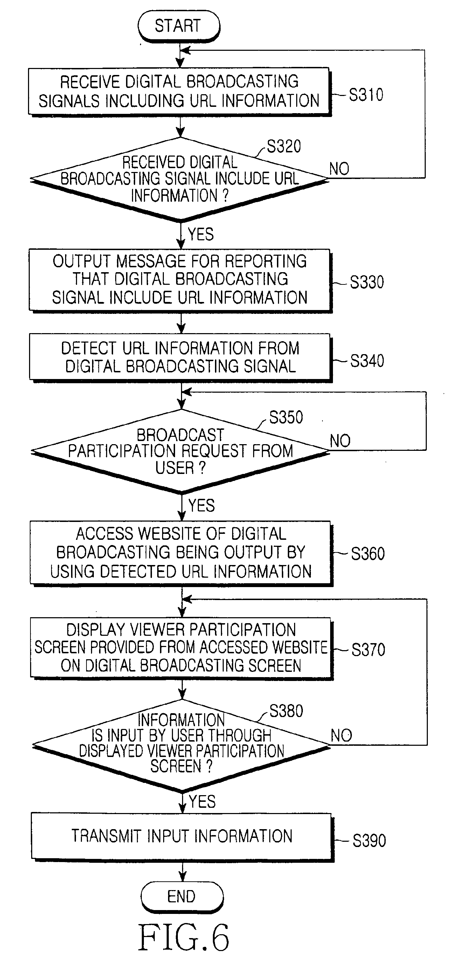

FIG. 6 is a flow diagram illustrating a process for providing an interactive digital broadcasting service in the mobile communication terminal according to a third embodiment of the present invention.

Hereinafter, FIG. 6 will be described with reference to FIGs. 1 and 2.

The controller 140 receives digital broadcasting signals, which have been transmitted from the broadcasting stations 10 and 20, through the digital broadcasting receiver 110, and outputs the digital broadcasting signals through an output unit (S310).

The controller 140 determines whether the digital broadcasting signals received in the digital broadcasting receiver 110 include URL information (S320).

If the received digital broadcasting signals include the URL information, the controller 140 outputs a message for reporting this status to the display unit 180 (S330). It is preferred that the controller 140 outputs the message together with the received digital broadcasting signals.

The controller 140 detects the URL information from the digital broadcasting signals (S340). It is preferred that the controller 140 stores the detected URL information in the memory 130. The controller 140 may also display the detected URL information in a portion of the digital broadcasting screen being output.

The controller 140 determines whether a broadcasting participation request is received from the user (S350). That is, while a user watches a broadcast program of the type that can receive a viewer question inquiry or a report or determine the ranking through a viewer vote, a quiz program which allows viewer participation or a commerce program such as a home shopping, the user can transmit a participation request by inputting a preset key, in order to access the Internet. When the broadcasting participation request is received from the user, the controller 140 may also detect the URL information. Further, it is preferred that the controller 140 displays the detected URL information in the lower end portion of the broadcasting output screen so as to allow the user to easily recognize the URL address of the corresponding broadcast program.

If the broadcasting participation request is received from the user, the controller 140 accesses the website of the digital broadcasting being currently output by using the detected URL information (S360). The website in S360 represents the website of the digital broadcasting program being output.

The controller 140 displays a viewer participation screen provided from the accessed website in the selected portion of the broadcasting output screen on the display unit 180 (S370). Herein, the controller 140 may display broadcasting information provided from the website on the digital broadcasting output screen through either an OSD or a PIP.

The controller 140 determines whether user input data is inputted to a viewer participation screen displayed on the display unit 180 (S380). The controller 140 transmits the data input by the user to the Internet server(60) of the broadcasting stations(10) and (20), when user input data is inputted on a viewer participation screen (S390). That is, the input data is transmitted to the corresponding website of the broadcast program. When the data input by the user corresponds to responses for a question inquiry, the data may be selection information of numbers or items. When the data input by the user corresponds to reports of viewers, the data may be input information. Further, the data input by the user may also be transmitted through a short message.

It is preferred that the controller 140 receives results reflecting the transmitted user input data, from the website, and displays the results on the display unit 180. Accordingly, the user can actively participate in the broadcast program which the user is watching, and directly participate in the progression of the broadcast program in real-time.

In the meantime, if a broadcast information request for the digital broadcasting being currently output is received from the user, the controller 140 may transmit the detected URL information to the separate external apparatus 200 connected to the mobile communication terminal 100, as described in FIG. 5. Then, the external apparatus 200 accesses the website of the digital broadcast program being output by using the URL information, and displays a viewer participation screen provided from the website. Further, if input information or selection information is input by the user through the displayed viewer participation screen, the external apparatus 200 transmits the input data to the Internet server 60 connected through a wired or wireless LAN.

The external apparatus 200 receives results reflecting the transmitted user input information or selection information, from the website of the Internet server 60, and displays the results.

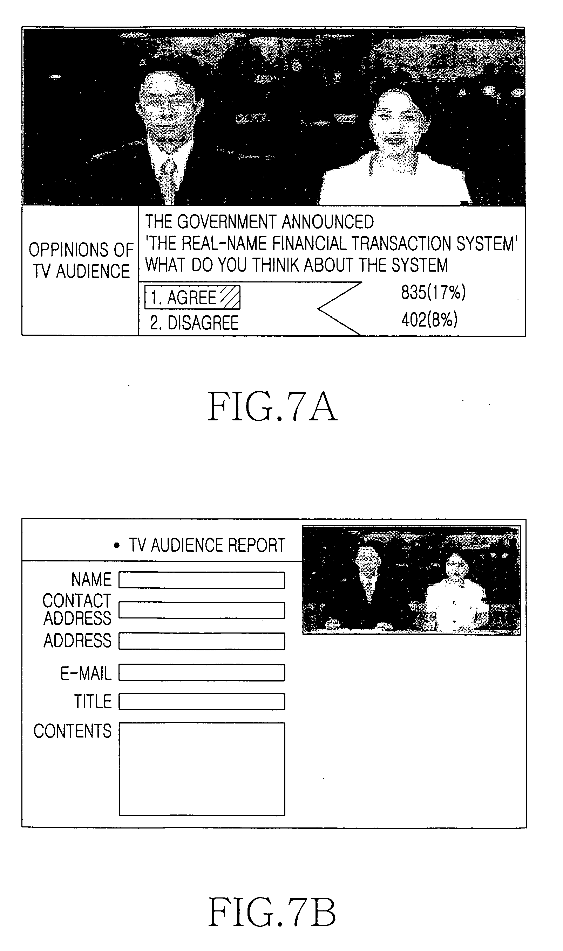

FIGs. 7A to 7H are views illustrating the process for providing the interactive digital broadcasting service in the mobile communication terminal according to the third embodiment of the present invention. That is, FIGs. 7A to 7H illustrate screens for displaying the viewer participation, which are provided from the website of the digital broadcasting being currently output, in portions of the digital broadcasting output screen after the mobile communication terminal accesses the website in response to the broadcasting participation request of the user during the output of the digital broadcast program of a selected channel.

FIGs. 7A and 7B respectively illustrate a question inquiry screen and a viewer report screen provided from a corresponding website with respect to a viewer question inquiry and a viewer report performed by a news program being output in the mobile communication terminal.

The mobile communication terminal may transmit data (i.e. question response data and viewer report data) input by a user through the viewer participation screens of FIGs. 7A and 7B to the website of the corresponding Internet server 60, receive results reflecting the user participation data from the website, and display the results on the viewer participation screens in real-time.

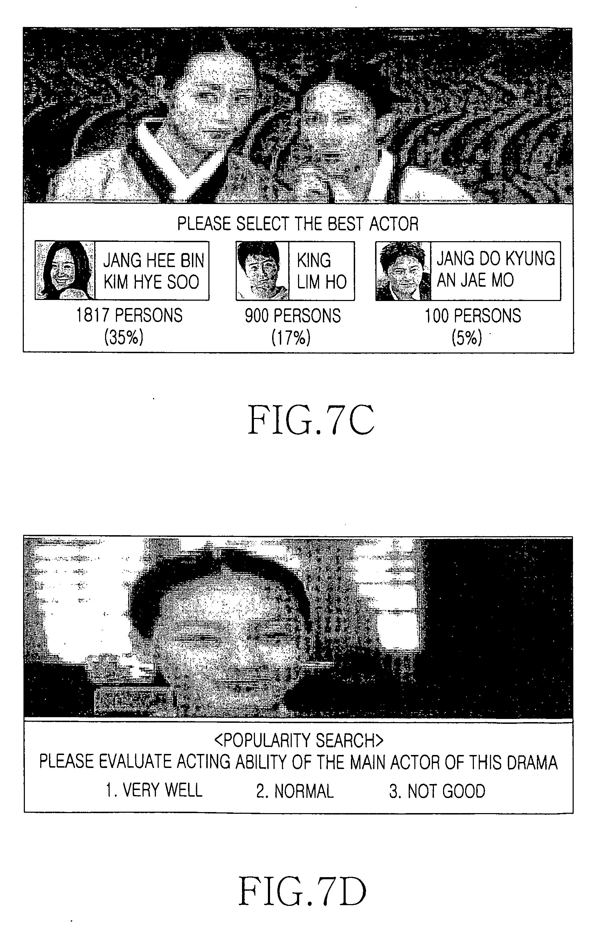

FIGs. 7C and 7D illustrate popularity inquiry screens provided from a corresponding website with respect to a popularity inquiry for performers of a drama program being output in the mobile communication terminal.

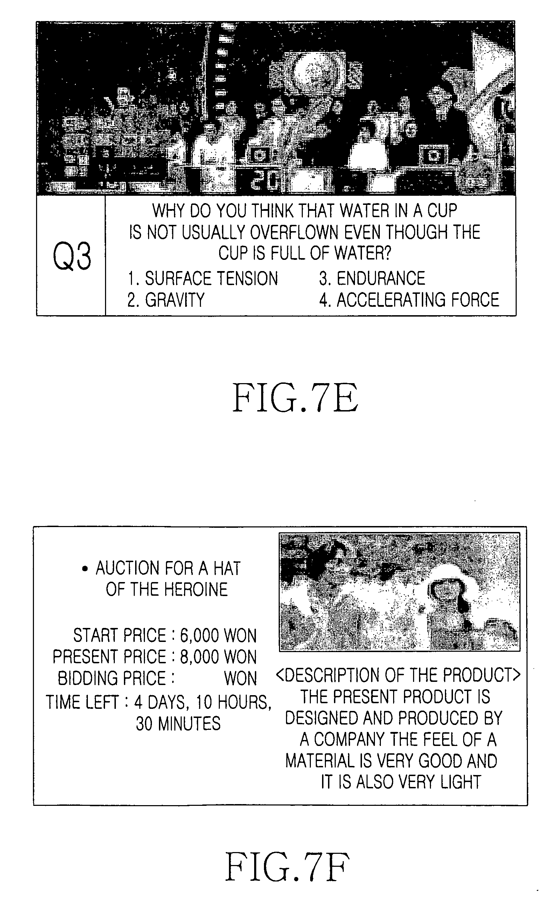

FIG. 7E illustrate viewer participation quiz screens provided from a corresponding website with respect to a viewer participation quiz of a quiz program being output in the mobile communication terminal.

FIG. 7F illustrate viewer auction screens provided from a corresponding website with respect to an auction of props used in a drama program being output in the mobile communication terminal.

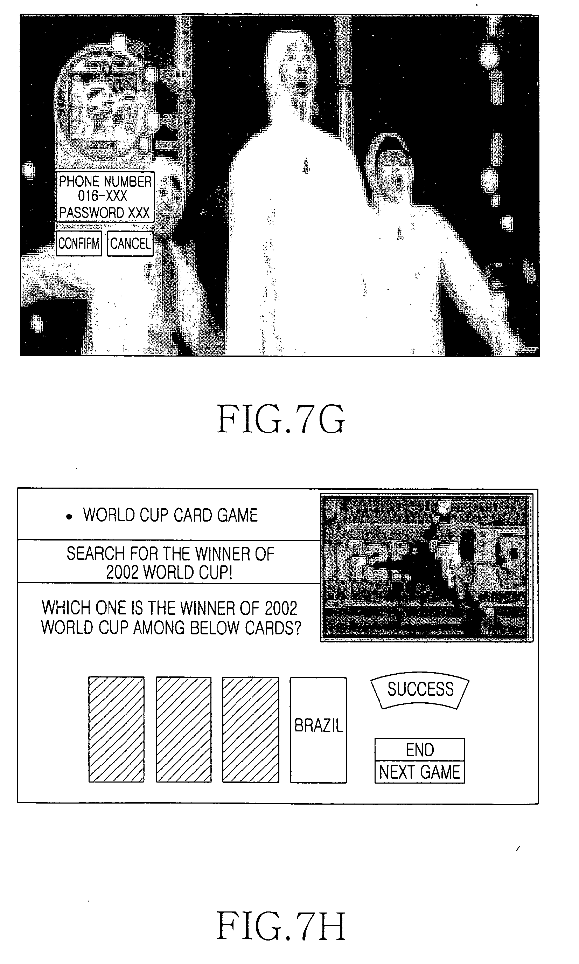

FIG. 7G illustrates a character download service screen provided from a corresponding website with respect to a pay character download service relating to performers of a comedy program being output in the mobile communication terminal.

FIG. 7H illustrates a screen for providing game contents relating to a sporting event broadcast being output in the mobile communication terminal.

The present invention as described above provides a method for providing an interactive digital broadcasting service in a mobile communication terminal capable of receiving digital broadcasting, thereby greatly improving user convenience. That is, users can access the Internet, retrieve information relating to broadcasting contents, and state their opinion about broadcast programs while watching a digital broadcasting. Further, users can directly participate in the progression of a program in real-time according to the characteristics of a broadcast program, and directly purchase corresponding goods even when watching a home shopping program.

Although preferred embodiments of the present invention has been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for providing an interactive digital broadcasting service in a mobile communication terminal for receiving digital broadcasting, the method comprising the steps of:
receiving and outputting digital broadcasting signals including uniform resource locator (URL) information of the digital broadcasting;
detecting the URL information from the received digital broadcasting signals;
accessing a website of the digital broadcasting by using the detected URL information when a broadcast information request for the digital broadcasting is received from a user; and
displaying broadcasting information provided from the website in a portion of a digital broadcasting output screen.

2. The method as claimed in claim 1, wherein the URL information is included and received in Electronic Program Guide (EPG) information of the digital broadcasting signals.

3. The method as claimed in claim 1, wherein the URL information is included and received in a transmission frame of the digital broadcasting signals.

4. The method as claimed in claim 1, wherein the URL information corresponds to at least one of URL information of a main website of the digital broadcasting and URL information of a specific program of the digital broadcasting.

5. The method as claimed in claim 1, wherein, in the step of outputting the digital broadcasting signals, a message for reporting that the URL information is included in the digital broadcasting signals is output with the digital broadcasting signals.

6. The method as claimed in claim 1, wherein, in the step of detecting the URL information, the detected URL information is output with the digital broadcasting signals.

7. The method as claimed in claim 1, further comprising storing the detected URL information.

8. The method as claimed in claim 1, wherein, in the step of displaying the broadcasting information, the broadcasting information provided from the website is displayed in the portion of the digital broadcasting output screen through an On-Screen-Display (OSD).

9. The method as claimed in claim 1, wherein the step of displaying the broadcasting information further comprises the steps of:
searching for the broadcasting information through the accessed website; and
displaying the broadcasting information.

10. The method as claimed in claim 1, further comprising the steps of:
transmitting the detected URL information to a separate external apparatus connected to the mobile communication terminal;
accessing, by the external apparatus, the website of the digital broadcasting by using the URL information; and
outputting, by the external apparatus, the information provided from the website on a screen thereof.

11. The method as claimed in claim 1, further comprising the steps of:
generating a URL input window and displaying the URL input window in the portion of the digital broadcasting output screen when the broadcast information request is received from the user during output of the digital broadcasting signals;
accessing a corresponding website by using the input URL information when URL information is input to the URL input window; and
displaying broadcasting information provided from the website in the portion of the digital broadcasting output screen.

12. The method as claimed in claim 1, further comprising the steps of:
generating a message input window and displaying the message input window in the portion of the digital broadcasting output screen when a message creation request is received from the user during output of the digital broadcasting signals; and
transmitting the input message to a requested recipient when a message is input to the message input window.

13. A method for providing an interactive digital broadcasting service in a mobile communication terminal for receiving digital broadcasting, the method comprising the steps of:
receiving and outputting digital broadcasting signals including uniform resource locator (URL) information of the digital broadcasting;
detecting the URL information from the received digital broadcasting signals;
accessing a website of the digital broadcasting through the detected URL information when a broadcast information request for the digital broadcasting is received from a user;
displaying a viewer participation screen provided from the website in a portion of a digital broadcasting output screen; and
transmitting data input by the user through the displayed viewer participation screen to the website.

14. The method as claimed in claim 13, wherein the URL information is included and received in Electronic Program Guide (EPG) information of the digital broadcasting signals.

15. The method as claimed in claim 13, wherein the URL information is included and received in a transmission frame of the digital broadcasting signals.

16. The method as claimed in claim 13, wherein the URL information corresponds to at least one of URL information of a main website of the digital broadcasting and URL information of a specific program of the digital broadcasting.

17. The method as claimed in claim 13, wherein, in the step of outputting the digital broadcasting signals, a message for reporting that the URL information is included in the digital broadcasting signals is output with the digital broadcasting signals.

18. The method as claimed in claim 13, wherein, in the step of detecting the URL information, the detected URL information is output with the digital broadcasting signals.

19. The method as claimed in claim 13, further comprising storing the detected URL information.

20. The method as claimed in claim 13, wherein, in the step of displaying the viewer participation screen, the viewer participation screen provided from the website is displayed in the portion of the digital broadcasting output screen through an On-Screen-Display (OSD).

21. The method as claimed in claim 13, wherein, in the step of transmitting the data, the data input by the user is transmitted to the website by a short message.

22. The method as claimed in claim 13, further comprising the steps of:
transmitting the detected URL information to a separate external apparatus connected to the mobile communication terminal when the broadcast information request for the digital broadcasting being output is received from the user;
accessing, by the external apparatus, the website of the digital broadcasting by using the received URL information;
outputting, by the external apparatus, the viewer participation screen provided from the website; and
transmitting, by the external apparatus, data input by the user through the output viewer participation screen.

23. The method as claimed in claim 13, further comprising receiving from the website a viewer participation screen reflecting the user input data transmitted to the website, and displaying the viewer participation screen.
